# EUROPEAN PATENT SPECIFICATION

(11) **EP 2 502 443 B1**
(45) Date of publication and mention of the grant of the patent: **08.01.2014**
(21) Application number: 09774987.3
(22) Date of filing: 16.11.2009
(51) Int. Cl.: H04W 36/12

(54) **APPARATUSES AND METHODS FOR REDUCING A LOAD ON A SERVING GATEWAY IN A COMMUNICATIONS NETWORK SYSTEM**
VORRICHTUNGEN UND VERFAHREN ZUR VERRINGERUNG DER LAST EINES VERSORGENDEN GATEWAYS IN EINEM KOMMUNIKATIONSNETZSYSTEM
APPAREILS ET PROCÉDÉS DE RÉDUCTION DE CHARGE SUR UNE PASSERELLE DE DESSERTE DANS UN SYSTÈME DE RÉSEAU DE COMMUNICATION

(43) Date of publication of application: 26.09.2012
(73) Proprietor: Telefonaktiebolaget L M Ericsson (publ), 164 83 Stockholm (SE)
(72) Inventor: WAHLMAN, Stefan, S-164 45 Kista (SE); PERSSON, Bengt, S-168 66 Bromma (SE)
(74) Representative: Kühn, Friedrich Heinrich
(86) International application number: PCT/SE2009/051297
(87) International publication number: WO 2011/059370

(56) References cited:
- EP-A1- 2 109 337
- EP-A2- 2 099 248
- "LTE; General Packet Radio Service (GPRS) enhancements for Evolved Universal Terrestrial Radio Access Network (E-UTRAN) access (3GPP TS 23.401 version 8.6.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.6.0, 1 June 2009 (2009-06-01), pages 112-131, XP002588987
- ERICSSON ET AL: "Serving GW Relocation and Modification of Handover and Tracking Area Update" 3GPP DRAFT; S2-080817_CR98_COMBINED_CR3_CR41_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Marina del Rey; 20080118, 18 January 2008 (2008-01-18), XP050263251 [retrieved on 2008-01-18]

## Description

### TECHNICAL FIELD

The present invention relates generally to the field of wireless communications, and, more specifically, to apparatuses and methods for reducing the load on a serving gateway during a handover of a user equipment from a serving radio base station to a target radio base station in a communications network system.

### BACKGROUND

The 3rd Generation Partnership Project (3GPP) which is responsible for the standardization of the UMTS (Universal Mobile Telecommunication Service) system is currently intensively discussing and working on the next generation mobile communication system of the UMTS system which is called LTE (Long Term Evolution). LTE is a technology for realizing high-speed packet-based communication that can reach high data rates both in the downlink and in the uplink. The 3GPP is not only working on LTE but also on the SAE (Service Architecture Evolution). The standardization work on those two items i.e. LTE and SAE has led to specifications of the so called EPC (Evolved Packet Core) and a new radio access network referred to as the E-UTRAN (Evolved Universal Terrestrial Access Network). The specifications of the SAE/LTE can be viewed as a milestone in the development of standards for the mobile/wireless broadband industry. The first release of SAE/LTE, referred to as release-8 (Rel-8) can provide peak rates of 300 Mbps in the downlink direction and about 75 Mbps in the uplink direction, a radio-network delay of e.g. 5 ms or less, a significant increase in spectrum efficiency and a network architecture designed to simplify network operation, reduce cost, etc. In order to support high data rates, LTE allows for a system bandwidth of up to 20 MHz. LTE is also able to operate in different frequency bands and can operate in at least frequency division duplex (FDD) and time division duplex (TDD). Other operation modes can also be used. The modulation technique used in LTE is known as OFDM (Orthogonal Frequency Division Multiplexing).

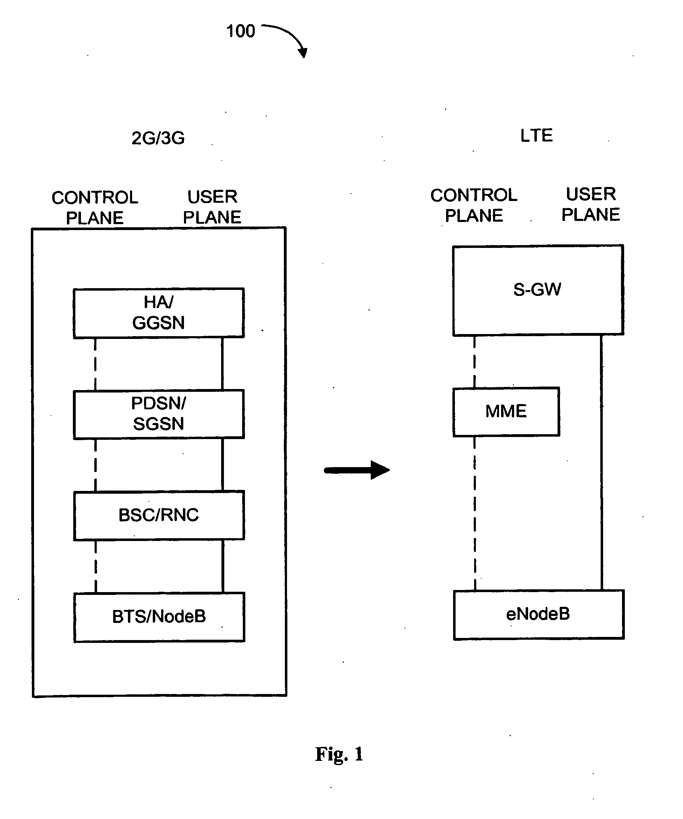

The EPC is a multi-access core network based on IP (Internet Protocol) that enables deployment of operation of one common packet core network for 3GPP access (LTE, 3G and 2G), non-3GPP radio access (e.g. WLAN, WiMaX) and fixed access (e.g. Ethernet, xDSL, cable and fiber). The EPC is defined around important paradigms of mobility, policy management, security etc. User equipments or user terminals are provided with handover schemes between different radio access technologies (e.g. between LTE and WiMaX). Unlike the 2G/3G 3GPP radio access networks, which are connected to the circuit-switched domain (CS-domain) of the 3GPP core network, the E-UTRAN is instead connected to the EPC. The E-UTRAN protocols and user plane functions are therefore used for the transmission of traffic from IP-based real-time and non-real time applications/services. The LTE/SAE system architecture is considered flat where the user LTE/SAE architecture user plane as defined, e.g., in the document ETSI TS 123 401 v8.6.0 (2009-06) "LTE; General Packet Radio Service (GPRS) enhancements for Evolved Universal Terrestrial Radio Access Networks (E-UTRAN) access" involves only two nodes: the LTE radio base station also known as eNB or eNodeB, and a network gateway node also known as S-GW (Serving-GateWay). This is illustrated in figure 1 which depicts the 2G/3G architecture for user and control planes and the corresponding LTE architecture for user and control planes. As shown and as mentioned above, the LTE flat architecture user plane involves only two nodes the eNodeB and the serving gateway, whereas the 2G/3G architecture involves four nodes in the user plane. The advantage with having a flat architecture is that it obviously reduces the number of nodes involved in the signalling connections and media paths. A further advantage is that due to that the radio network controller (RNC) functionality of 2G/3G is incorporated inside the eNodeB, handovers and mobility will be easily negotiated and managed between eNodeBs which are connected to the core network using the core network radio access network interface. The S-GW acts as mobility anchor for mobility within 3GPP-specific access technologies, and also relays traffic between the 2G/3G GPRS support node (SGSN) access and the packet gateway. For E-UTRAN (i.e. LTE access network), the S-GW is directly connected to it through an interface known as S1 interface, while the SGSN is the intermediate node when 2G/3G radio access network (i.e. GERAN/UTRAN) is used. The S-GW is thus highly involved in mobility and handover scenarios within SAE/LTE alone and/or between SAE/LTE and 2G/3G and/or between SAE/LTE and non-3GPP access networks (e.g. WLAN, WiMaX). The MME (Mobility Management Entity) is also, as shown in figure 1, incorporated in the architecture for handling control functions such as authentication, security and mobility/handover of a user equipment. The MME is thus a control plane entity in E-UTRAN access network technology. Figure 1 also shows a HA (Home Agent); a GGSN (Gateway GPRS Support Node); a PDSN (Packet Data Serving Node); a BSC (Base Station Controller); a BTS (Base Transceiver Station) and a NodeB, which are part of 2G/3G.

Even though the flat architecture has it advantages as mentioned earlier, it also has it drawbacks. One of the drawbacks is that a flat architecture puts very high requirements on the S-GW node in terms of route updates in a high mobility environment i.e. in a network where a great number of base stations from the same and/or different technologies are deployed. In other words, since the S-GW node uses "normal" router technology with very high requirements on routes update capacity, the S-GW node may limit the total capacity of an environment wherein seamless mobility for a user equipment's sessions across the same and/or different access technologies is a requirement. By mobility is meant handing over ofUEs from a serving radio base station to a target radio base station.

### SUMMARY

An object of the exemplary embodiments of the present invention is thus to address the above mentioned problem by apparatuses in the form of a proxy entity and a mobility management entity respectively and methods in the proxy entity and in the mobility management entity respectively, for handing over user equipments (UEs) from a source/serving radio base station to a target radio base station in a wireless telecommunications system without increasing route updates in a serving gateway of the system and without limiting the capacity of the system due to handover and/or roaming of user equipments within the same network access technology and/or between different network access technologies.

According to an aspect of exemplary embodiments of the present invention, the above stated problem is solved by means of a proxy entity for reducing a load on a serving gateway (S-GW) of a wireless communications network system, during a handover of a UE from a serving radio base station to a target radio base station. The network system further comprising a MME. The proxy entity comprises a cross connecting circuit configured to support a tunneling link protocol and further configured to receive, from the MME, a cross connect set up request message, requesting the cross connecting circuit to establish a tunnel between the proxy entity and the serving radio base station. The cross connecting circuit is further configured to establish the tunnel towards the serving radio base station. The established tunnel is replacing a previously established tunnel between the proxy entity and the S-GW. The proxy entity further comprises a receiver circuit configured to receive, from the MME, a request to handover the UE from the serving radio base station to a target radio base station, the request comprising an identifier of the established tunnel and an address of the target radio base station. The cross connecting circuit is further configured to establish a cross connect tunnel towards the target radio base station using the identifier of the established tunnel and the address of the target radio base station, thereby reducing the load on the serving gateway during the handover of the UE from the serving radio base station to the target radio base station.

According to another aspect of the exemplary embodiments of the present invention, the above stated problem is solved by means of a MME for enabling the proxy entity described above to reduce a load on a S-GW during a handover of a UE from a serving radio base station to a target radio base station. The MME comprises a transmitter circuit configured to transmit, to a cross connecting circuit of the proxy entity, a cross connect setup request message requesting the cross connecting circuit to establish, using a tunneling link protocol, a tunnel between the proxy entity and the serving radio base station. The transmitter circuit is further configured to transmit a request to the serving radio base station requesting the serving radio base station to release a connection between the UE and the serving radio base station. The transmitter circuit is further configured to transmit a handover request to the proxy entity requesting the proxy entity to handover the UE from the serving radio base station to a target radio base station, the request comprising an identifier of the established tunnel and an address of the target radio base station. The transmitter circuit is further configured to send to the target radio base station, a request to setup a connection between the UE and the target radio base station.

The exemplary embodiments of the present invention also relate to a method in a proxy entity and to a method in a MME.

An advantage of the exemplary embodiments of the present invention is to relieve or reduce or off load the S-GW from performing capacity intensive route updates in a high mobility environment. In other words, the serving gateway gets more relaxed requirements regarding route update capacity.

Another advantage of the exemplary embodiments of the present invention is that the proxy entity with the cross connecting circuit/circuitry and its corresponding functionality(ies) is in line with the modern network architecture and thus can be incorporated/implemented in any suitable network entity dealing with or involved in mobility procedures.

Still other advantages, objects and features of the exemplary embodiments of the present invention will become apparent from the following detailed description in conjunction with the accompanying drawings, attention to be called to the fact, however, that the following drawings are illustrative only, and that various modifications and changes may be made in the specific embodiments illustrated as described within the scope of the appended claims.

### BRIEF DESCRIPTION OF THE DRAWINGS

Figure 1 illustrates a simplified block diagram of 2G/3G respectively a LTE/SAE architecture according to prior art.
Figure 2 illustrates a signalling diagram of a conventional handover scenario according to prior art.
Figure 3 illustrates a signalling diagram of a handover scenario according to an exemplary embodiment of the present invention.
Figure 4 illustrates a simplified block diagram of a network system wherein the exemplary embodiments of the present invention may be applied.
Figure 5 illustrates a simplified block diagram of a proxy entity according to an exemplary embodiment of the present invention.
Figure 6 illustrates a simplified block diagram of a mobility management entity according to an exemplary embodiment of the present invention.
Figure 7 is a diagram illustrating a flowchart of a method for use in a proxy entity, according to exemplary embodiments of the present invention.
Figure 8 is a diagram illustrating a flowchart of a method for use in a mobility management entity according to exemplary embodiments of the present invention.

### DETAILED DESCRIPTION

In the following description, for purposes of explanation and not limitation, specific details are set forth such as particular architectures, scenarios, techniques, etc. in order to provide thorough understanding of the exemplary embodiments of the present invention. However, it will be apparent from the following detailed description that the exemplary embodiments of the present invention may be practiced in other embodiments that depart from these specific details.

The different exemplary embodiments of the present invention are described herein by way of reference to particular example scenarios. In particular the embodiments are described in a non-limiting general context in relation to a communications network based on LTE. It should be noted that the exemplary embodiments of the present invention are not restricted to only LTE but can be applicable in any other suitable wireless communication system wherein handover is performed such as in UMTS (or WCDMA), WiMaX (Worldwide interoperability for Microwave Access), GSM, GPRS, etc. It should also be noted that the exemplary embodiments of the present invention can also be applicable in hybrid inter-operating systems such as LTE and UMTS and/or GSM and/or GPRS etc.

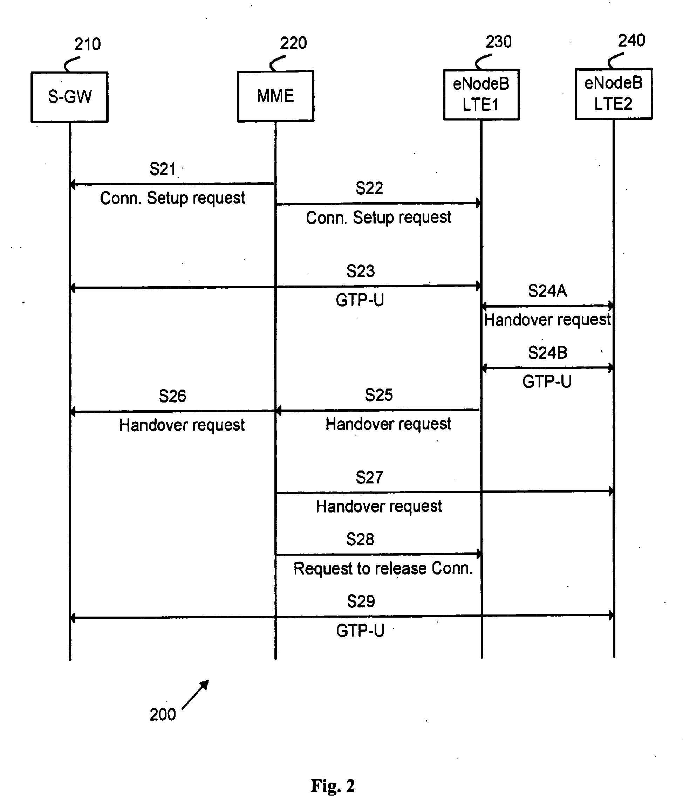

Referring to figure 2, there is illustrated a simplified diagram 200 depicting the signalling involved in a conventional handover scenario in a wireless communications network LTE system. As shown, the diagram comprises a serving gateway (S-GW) 210; a mobility management entity (MME) 220, a first radio base station 230 denoted eNodeB LTE 1 here considered to be the radio base station serving a UE (not shown); and a second radio base station 240 denoted eNodeB LTE 2 to which the UE is to be handed over. eNodeB LTE 2 240 is therefore considered to represent the target radio base station.
The functions of S-GW 210 comprise: routing and forwarding of user data packets, while also acting as a mobility anchor for the user plane during e.g. inter-eNodeB handovers and as an anchor for mobility between the 3GPP LTE and other 3GPP or non-3GPP technologies. For idle state UEs, the S-GW 210 is configured to terminate the downlink (DL) data path and is also configured to trigger paging when DL data arrives for the UE. S-GW 210 is also configured to manage and store UE contexts, e.g. parameters of the internet protocol (IP) bearer service, network internal routing information. It also is configured to perform replication of the user traffic of the UE in case of lawful interception. The S-GW 210 is further responsible for tunnelling user plane traffic between a radio base station, e.g. eNodeB LTE1 230 and a packet data network gateway (PDG) (not shown). The S-GW 210 also performs other functions not explicitly described here.

The MME 220 acts as a control node. It is responsible for idle mode UE tracking and paging procedure including retransmissions. MME 220 is also involved in the bearer activation/deactivation process and is also responsible for choosing or selecting a S-GW for a UE at the initial attach and at time of intra-network handover (e.g. intra-LTE handover) involving Core Network (CN) node relocation. MME 220 is responsible for authenticating the user (by interacting with the e.g. a Home Subscriber Server (HSS), not shown). It should also be mentioned that the so called Non-Access Stratum (NAS) signaling terminates at the MME and it is also responsible for generation and allocation of temporary identities to UEs. The NAS is a functional layer running between the UE the CN. The layer supports traffic and signalling messages between the CN and UE.

The MME 220 also checks the authorization of the UE to camp on e.g. a service provider's Public Land Mobile Network (PLMN) and also enforces UE roaming restrictions. The MME 220 is also the termination point in the network for ciphering/integrity protection for NAS signaling and handles the security key management. Lawful interception of signaling is also supported by the MME 220. The MME 220 also provides the control plane function for mobility between LTE and 2G/3G access technologies.

Referring back to figure 2, prior to that a handover is initiated; the MME 220 is configured to set up a connection between the S-GW 210 and eNodeB LTE 230. This is performed by the MME 220 sending a connection setup request message S21 to the S-GW 210 and a connection set up request message S22 to eNodeB LTE 1 230. The message S21 is sent on a control plane and it comprises a group of parameters comprising e.g. the IP address of the destination terminating point which, in this case, is the S-GW 210. The message S22 is also sent on a control plane and it comprises a group of parameters comprising e.g. the IP address of the destination terminating point which, in this case, is the eNodeB LTE 1 230.

After the setting up of the connection, a tunnel S23 is established between the S-GW 210 and eNodeB LTE 1 230. This tunnel S23 is a GPRS tunneling protocol for UMTS used for user plane (GTP-U) and it comprises the IP address of eNodeB LTE 1 230, the IP address of the S-GW 210 and the tunnel identity/identifier of user data packet(s). The interface used for this tunnel is the so-called S1 interface.

At mobility i.e. when the UE is to be handed over from eNodeB LTE 1 230 to eNodeB LTE 2 240 a handover request is negotiated between eNodeB LTE 1 and eNodeB LTE 2 on the control plane S24A and on the user plane S24B (GTP-U). The interface used for S24A and S24B is a so-called X2 interface defined between the serving eNodeBs LTE 1 and the target eNodeB LTE 2 240. Subsequently, a handover request S25 is transmitted from eNodeB LTE 1 230 to MME 220 on the control plane. The MME 220 then sends a handover request S26 to S-GW 210 on the control plane and a handover request S27 to eNodeB LTE 2 240, also on a control plane, requesting the setting up of a connection between the UE and the target radio base station eNodeB LTE 2 240. The MME 220 also sends a request S28 to eNodeB LTE 1 230 to release the connection between the UE and the serving radio base station eNodeB LTE 1 230. Thereafter a GTP-U tunnel S29 is established between S-GW 210 and the new serving radio base station e.g. eNodeB LTE 2 240. The GTP-U tunnel comprises the IP address of S-GW 210; the IP address of eNodeB LTE 2 240 and the tunnel identity/identifier.

As described above, the S-GW 210 is highly involved during all handovers involved in the network. This also means that high requirements on routes update capacity are put on the S-GW 210 which therefore can limit the total capacity of a network. The capacity limitation due to the involvement of the S-GW 210 is even be higher since the functions of the S-GW are not restricted to handovers, as described earlier.

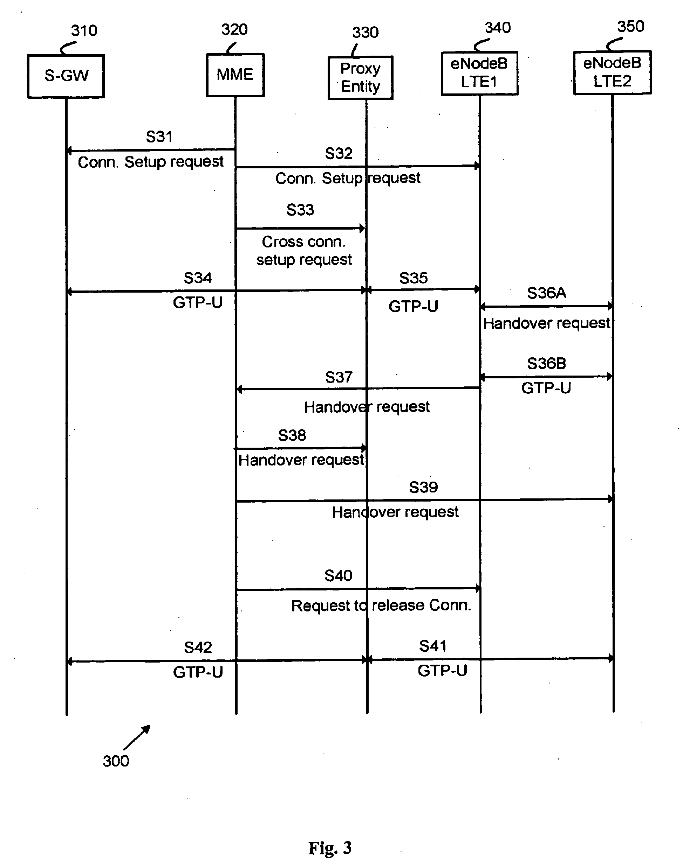

Referring to figure 3 there is illustrated a simplified diagram 300 depicting the signalling involved in a handover according to an exemplary embodiment of the present invention.
As shown, the diagram comprises, as in figure 2, a serving gateway (S-GW) 310; a MME 320, a first radio base station 340 denoted eNodeB LTE 1, here considered to be the radio base station serving a UE (not shown); and a second radio base station 350 denoted eNodeB LTE 2 to which the UE is to be handed over. eNodeB LTE 2 240 is therefore the target radio base station. Figure 3 also depicts a proxy entity 330 which according to exemplary embodiments of the present invention is configured to reduce the load on S-GW 310 during a handover of the UE from the serving radio base station eNodeB LTE 1 340 to the target radio base station eNodeB LTE 2 350 as will be described below.

As shown in figure 3, prior to that a handover is initiated, the MME 320 is configured to set up a connection between the S-GW 310 and eNodeB LTE 1 340. This is performed by the MME 320 sending a connection setup request message S31 to the S-GW 230 and a connection set up request message S32 to eNodeB LTE 1 340. The message S31 is sent on a control plane and it comprises a group of parameters comprising e.g. the IP address of the destination terminating point which, in this case, is the S-GW 310. The message S32 is also sent on a control plane and it comprises a group of parameters comprising e.g. the IP address of the destination terminating point which, in this case, is the eNodeB LTE 1 340.

After the setting up of the connection the MME 320 is, according to an exemplary embodiment of the present invention, configured to send, on the control plane, a cross connect request message S33 to the proxy entity 330 or to a cross connect circuit/circuitry of the proxy entity 330 which supports a tunneling link protocol. The cross connect setup request message S33 is a request to establish, using the tunneling link protocol (GTP), a tunnel between the proxy entity 330 and the serving radio base station eNodeB LTE 1 340. The cross connect setup request message S33 comprises the address of eNodeB LTE 1 340. Subsequently, the cross connecting circuit of the proxy entity 330 is configured to establish a GTP-U tunnel S35 towards eNodeB LTE 1 340. This is done to replace or to reuse a previously established GTP-U tunnel S34 between the cross connecting circuit of the proxy entity 330 and the S-GW 310.The GTP-U tunnel S35 between the proxy entity 330 and eNodeB LTE 1 340 comprises a tunnel identity/identifier, the IP address of the proxy entity 330 and the IP address of the serving radio base station eNodeB LTE 1 340. The previously established GTP-U tunnel between the proxy entity 330 and the S-GW 310 comprises the tunnel identity/identifier, the IP address of S-GW 310 and the IP address of the proxy entity 330.

Referring back to figure 3, at mobility i.e. when the UE is to be handed over from eNodeB LTE 1 340 to eNodeB LTE 2 350, a handover request is negotiated between eNodeB LTE I and eNodeB LTE 2 on the control plane S36A and on the user plane (GTP-U) S36B. The interface used for signals S36A and S36B is the X2 interface defined between the serving eNodeBs LTE 1 340 and the target eNodeB LTE 2 350. The MME 320 is further configured to receive a handover request S37 from eNodeB LTE 1 340 as in a conventional handover scenario (see figure 2). However and according to an exemplary embodiment of the present invention, the MME 320 is configured to send to the proxy entity 330 (or to the cross connecting circuit of the proxy entity 330), on the control plane, a request S38 to handover the UE from the eNodeB LTE 1 340 to eNodeB LTE 2 350, the request S38 comprising an identifier of the established tunnel and an address of eNodeB LTE 2 350. The MME 320 is further configured to transmit a request S39 to eNodeB LTE 2 350 requesting eNodeB LTE 2 to set up a connection towards the UE. The MME 320 is further configured to send to eNodeB LTE 1 340 a request S40 to release the connection between the UE and the serving radio base station. Subsequently and according to an exemplary embodiments of the present invention, the proxy entity 330 (or the cross connecting circuit of proxy entity) is configured to execute the cross connecting between the proxy entity and eNodeB LTE 2 by establishing a cross connect tunnel S41 (GTP-U) towards eNodeB LTE 2 350 using the identifier of the established tunnel and the address of eNodeB LTE 2, thereby reducing the load on the S-GW 310 during the handover of the UE. This is because the S-GW 310 is not involved in the mobility of the UE. This also means that the load on the control plane of the S-GW due to mobility is reduced or relieved leaving the S-GW 310 to perform other functions instead such as packet forwarding; replication of the user traffic of the UE in case of lawful interception etc. Furthermore, since the proxy entity 330 effectively handles the cross connection and the route updating of the cross connection between the proxy entity and eNodeBs, the proxy entity 330 limits the impact (over interface S1) on S-GW 310 and thereby relaxes the computational processing (CP) requirements in S-GW 310. The proxy entity 330 can be viewed as an aggregating node having a cross connecting functionality that offloads the requirements regarding route update capacity of the S-GW 310. The proxy entity 330 is not restricted to LTE. The proxy entity can e.g. be implemented in a radio network control (RNC) node of a WCDMA network or can be a separate proxy entity connected to the RNC and located at the same layer as the base station controller (BSC) and RNC has in a GSM or a WCDMA network, respectively. Furthermore, the functionality of the proxy entity according to the exemplary embodiment of the present invention can be implemented in a combined RNC and BSC node and connected to LTE leading to that all 3GPP standards share a common network topology over IP and one node type for each NAS type.

Referring to figure 3, it should be mentioned that the GTP-tunnel S42 between the proxy entity 330 and the S-GW 310 is unchanged meaning that is it similar to the previously established tunnel S34. In other words, S42 is not involved during the handover process described above.

As described earlier, the MME 320, in according with the exemplary embodiment of the present invention, is responsible in sending the cross connect setup message to the proxy entity 330 and to further send to the cross connecting circuit of the proxy entity 330 the request to perform the handover of the UE from the serving to the target radio base station which is executed in the proxy entity. Thus the MME 320 controls the GTP-U tunnel cross connect in the cross connecting circuit of the proxy entity 330. Furthermore, at mobility the GTP-U tunnel between the S-GW 310 and the proxy entity is 310 reused since a new tunnel between the proxy entity 330 and the target base station is established (update of the cross connect). It should be mentioned that the functionalities of the MME 320 and the proxy entity 330 described above are not restricted to a handover scenario within a LTE network. In other words, the above is applicable in handovers in hybrid networks involving different technologies e.g. a handover between radio base stations of 3GPP technologies (e.g. LTE <--> LTE; or LTE <--> UMTS etc.), or between 3GPP technologies and non-3GPP technologies (e.g. LTE <--> WLAN or LTE <--> WiMaX).

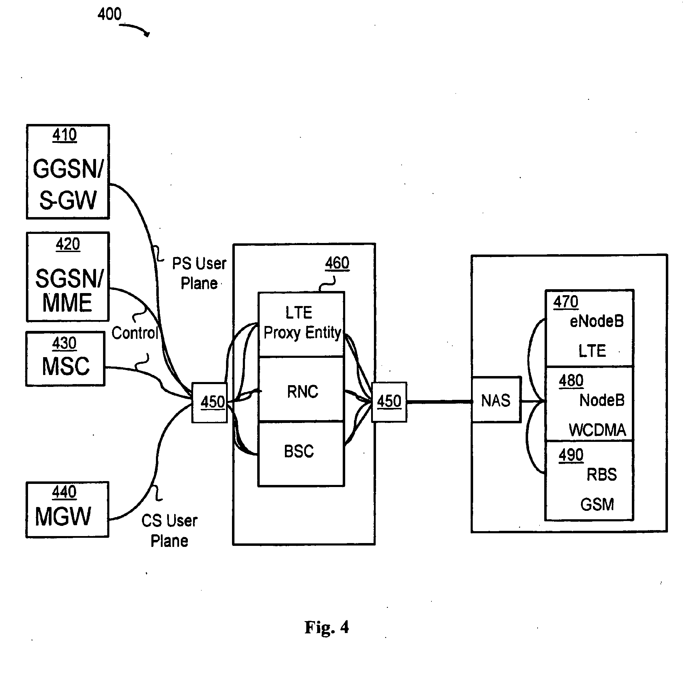

Referring to figure 4 there is illustrated a hybrid network system 400 comprising nodes of a WCDMA network; nodes of a LTE network and nodes of a GSM network respectively, wherein the proxy entity 460 and the MME 420 in accordance with the exemplary embodiments of the present invention can be applied. As shown, the proxy entity, the RNC and the BSC are shown located together in block 460. Block 460 is connected on the one side to the GGSN/S-GW node 410, the SGSN/MME 420, the MSC-S 430, and the MGW (Media Gateway) 430 via an edge node 450 (e.g. a smart edge node) acting as a switch or a router; and on the other side to eNodeB(s) (of LTE) 470; to NodeB(s) (of a WCDMA network) 480 and to radio base station(s) (RBS(s)) (of a GSM network) 490 via another edge node 450. The Non-Access Stratum (NAS) is also shown. The architecture of the hybrid network system 400 enables common network topology over IP. The interfaces for control plane, CS user plane ad PS (Packet-Switched) user plane are also indicated. Note that the proxy entity is in this exemplary embodiment of the present invention shown as part of LTE but this is not necessary.

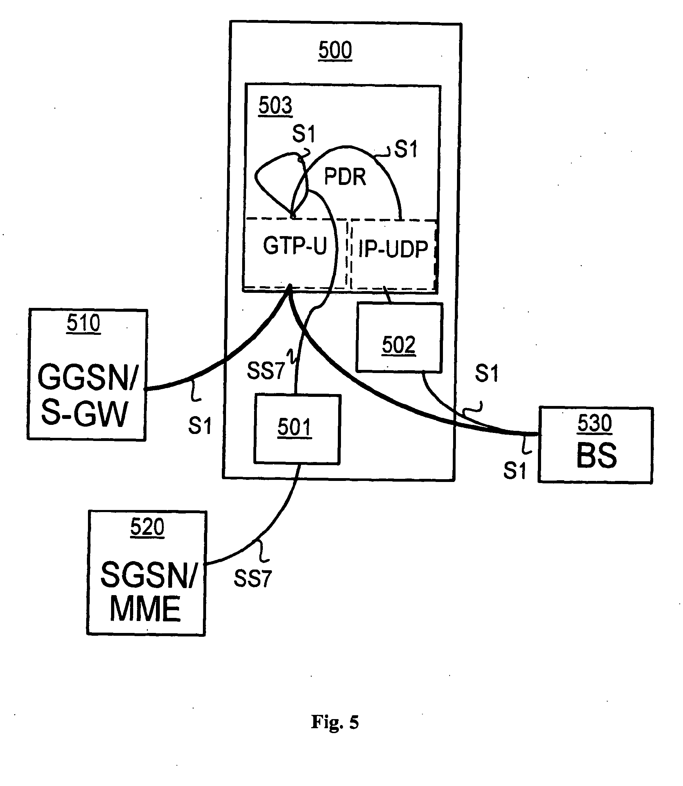

Referring to figure 5 there is illustrated a simplified block diagram of an exemplary proxy entity 500 in accordance with another exemplary embodiment of the present invention. As shown, the proxy entity 500 is connected to GGSN/S-GW 510; the SGSN/MME 520 and to radio base station 530, which in this example is denoted BS which can be a eNodeB, a NodeB or a RBS or any other type of base station. The proxy entity 500 is connected to BS 530 via a S 1 interface. The S 1 interface is also used to connect the proxy entity 500 to the GGSN/S-GW 510. The interface used to connect the proxy entity 500 to the SGSN/MME 520 can e.g. be the standardized SS7 interface. As shown in figure 5, the proxy entity 500 can comprise protocol means 501 capable in supporting a plurality of protocols such as e.g. for transporting signalling messages and multiple streams and message delivery etc. As an example, the protocol means 501 may support the SCTP (Stream Control Transmission Protocol) defined for LTE (and/or WiMAX); and/or the RANAP (Radio Access Network Application Part) protocol defined for UMTS and/or the SCCP (Signalling Connection Control Part) protocol defined for GSM. The RANAP can be used to handle setup/teardown functionalities. The proxy entity 500 may further comprise means (not shown) for operation and maintenance (O&M) operations; license control activation etc. The protocol means 501 is shown connected via the SS7 interface to the SGSN/MME 520. The proxy entity 500 further comprises another protocol means 502 configured to support e.g. the IP-UDP (Internet Protocol-Used Datagram Protocol) which is a transport layer protocol used along with IP, to handle applications such as e.g. time-sensitive applications (where loss of packets is preferable to delayed packets) and e.g. broadcasting (where feedback is not necessary).The protocol means 502 is shown connected to BS 530 via the S 1 interface. As shown, the proxy entity 500 further comprises, in accordance with the exemplary embodiments of the present invention, a cross connecting circuit/circuitry 503 which as described earlier, is capable in supporting the GTP-U protocol. The cross connecting circuit 503 may further comprise a multiplexer (not shown) and a routing capability (denoted PDR (Packet Data Router) in figure 5) to cross connect between GTP-U tunnels. As shown, the cross connecting circuit 503 is schematically shown connected to protocol means 501 and 503 and to GGSN/S-GW 510. The proxy entity 500 also comprise a receiver circuit to receive messages from the GGSN/S-GW, the SGSN/MME and from the BS as previously described. The receiver circuit (not shown) may e.g. be connected to the cross connecting circuitry 501; to the protocol means 501 and to protocol means 502 It should be mentioned that the proxy entity 500 may comprise additional components/circuits/means/interfaces not explicitly depicted in figure 5, such as a transmitting means or transmitter, signal processing means, and X2 interface etc.

As mentioned earlier, the proxy entity 500 is capable in reducing or relieving a load on S-GW 510 during a handover of a UE from a serving radio base station to a target radio base station. The cross connecting circuit 503 which is configured to support the tunneling link protocol GTP, receives from a MME 520 a cross connect set up request message, requesting the cross connecting circuit 503 to establish a GTP-U tunnel between the proxy entity 500 and the serving radio base station. The cross connecting circuit 503 is further configured to establish the GTP-U tunnel towards the serving radio base station; and the receiver circuit which can be part of the interface of the proxy entity 500, is configured to receive, from the MME, a request to handover the UE from the serving radio base station to a target radio base station, the request comprising an identifier of the established GTP-U tunnel and an address of the target radio base station. Based on that, the cross connecting circuit 503 is further configured to establish a cross connect tunnel towards the target radio base station, thereby reducing the load on the S-GW during the handover of the UE from the serving radio base station to the target radio base station. It should be mentioned that implementation of the proxy entity 500 in a single technology network of in a hybrid technology network improves IP-address plane independent between the core network(s) and the radio access network(s) and also allows e.g. reuse of IP addresses for user plane connects. The proxy entity 500 can, as previously mentioned, be considered as an aggregation entity/node.

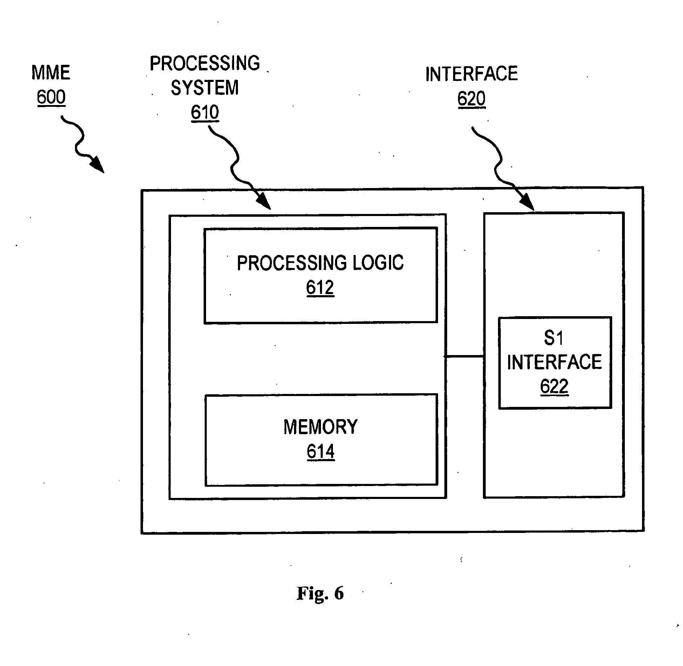

As mentioned earlier, the exemplary embodiments of the present invention also include a MME for enabling a proxy entity to reduce or relieve a load on a serving gateway, during the handover of a UE from a serving to a target radio base station. Figure 6 is a diagram of exemplary components of a MME 600 capable in communicating with the proxy entity 500 of figure 5. As illustrated, MME 600 may include a processing system 610 and an interface 620 (e.g. S1 interface) for transmitting receiving signals. The interface 620 can thus include a combination of a transmitter circuit and a receiver circuit. Processing system 610 may control the operation of MME 600. Processing system 610 may also process information received via interface 620. As illustrated, processing system 610 may include processing logic 612 and a memory 614. It will be appreciated that processing system 610 may include additional and/or different components than illustrated in figure 6.

Processing logic 612 may include a processor, microprocessor, an ASIC, FPGA, or the like. Processing logic 612 may process information received via interface 620. In addition, processing logic 612 may generate control messages and/or data messages and cause those control messages and/or data messages to be transmitted via interface 620. Processing logic 612 may also process control messages and/or data messages received from interface 620. Memory 614 may include a RAM, a ROM, and/or another type of memory to store data and instructions that may be used by processing logic 612.

Interface 620 may include one or more line cards that allow MME 600 to transmit data to and receive data from other devices over wired and/or wireless connections. As illustrated, interface 620 may include an S1 interface 622 that allows MME 600 to communicate, for example, to at least proxy entity 500. It will be appreciated that interface 620 may include additional interfaces than illustrated in figure 6. For example, interface 620 may include an X2 interface for communicating with another network, such as a PDN (packet data network).

MME 600 may perform certain operations in response to processing logic 612 executing software instructions contained in a computer-readable medium, such as memory 614. The software instructions may be read into memory 614 from another computer-readable medium or from another device via interface 620. The software instructions contained in memory 614 may cause processing logic 612 to perform processes described herein. Alternatively, hardwired circuitry may be used in place of or in combination with software instructions to implement processes described herein.

As presented earlier, MME 600 is configured to control function(s) of the cross connecting circuit of the proxy entity 500 by transmitting a cross connect setup request message requesting the cross connecting circuit to establish, using a tunneling link protocol (e.g. GTP), a tunnel between the proxy entity and a serving radio base station currently serving a UE. MME 600 is further configured, by means of the interface 622 (or the transmitter circuit connected to or incorporated in interface 622), to transmit a request to the serving radio base station requesting the serving radio base station to release a connection between the UE and the serving radio base station. The transmitter circuit of interface 622 is also arranged to transmit a handover request to the proxy entity requesting the proxy entity to handover the UE from the serving radio base station to a target radio base station, the request comprising an identifier of the established tunnel and an address of the target radio base station. The transmitter circuit of interface 622 is also configured to send to the target radio base station a request to setup a connection between the UE and the target radio base station. Thus, the MME 600 both establishes and controls the GTP-U tunnel cross connect in the proxy entity 500 in such a way that, at mobility of a UE, the GTP-U tunnel between the S-GW and the proxy entity is reused/replaced and a new tunnel between the proxy entity and the serving radio base station and between the proxy entity and the target base station are established. This can be viewed as an update of the cross connect so that the CP processing load on the S-GW is reduced or relieved and the S-GW gets more relaxed requirements regarding route update capacity.

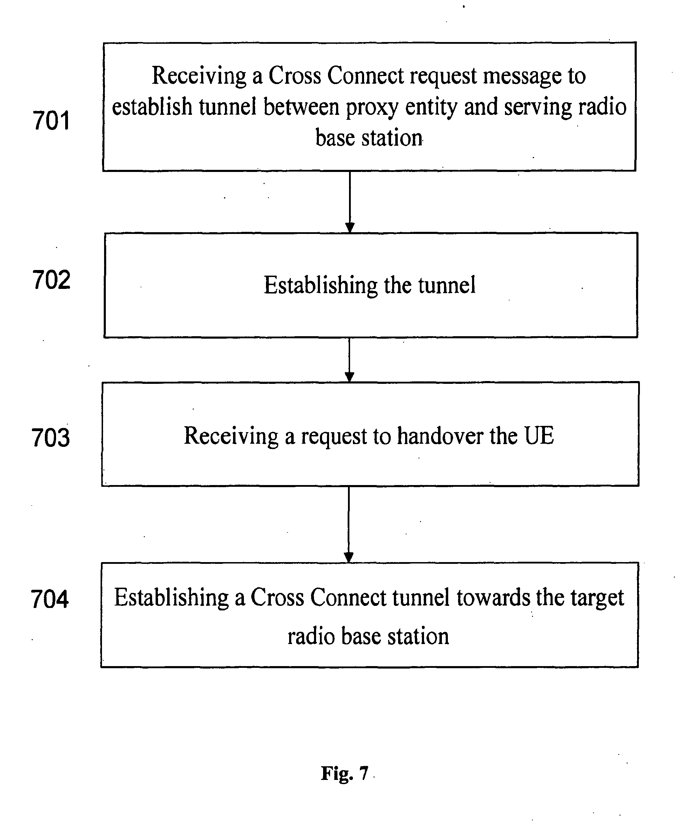

Referring to figure 7 there is described a flowchart of a method for reducing a load on a S-GW, aimed to be performed/implemented by/in the proxy entity 500 of figure 5. As shown, the main steps comprise:
(701) receiving a cross connect request message to establish a tunnel between the proxy entity and a serving base station serving a UE;
(702) establishing the tunnel;
(703) receiving a request to handover the UE from the serving to the target radio base station;
(704) establishing a cross connect tunnel towards the target radio base station using an identifier of the tunnel established between the proxy entity and the serving radio base station and an address of the target radio base station thereby reducing the load on the S-GW.
Additional details regarding the functions of the proxy entity have already been described and are therefore not repeated.

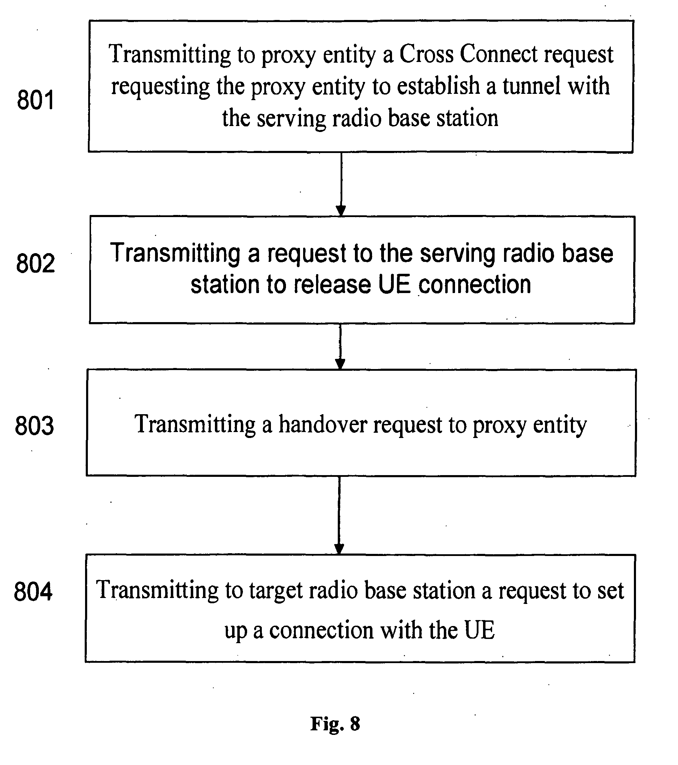

Referring to figure 8 there is described a flowchart of a method aimed to be performed/implemented in MME 600 for enabling proxy entity 600 to reduce or relieve the (CP) load on a S-GW during handover of a UE from a serving to a target radio base station. As shown, the main steps comprise:
(801) transmitting, to the proxy entity (or the cross connecting circuit or the proxy entity), a cross connect setup request message requesting the proxy entity to establish a tunnel between the proxy entity and the serving radio base station;
(802) transmitting a request to the serving radio base station requesting the serving radio base station to release a connection between the UE and the serving radio base station;
(803) transmitting a handover request to the proxy entity requesting the proxy entity to handover the UE from the serving radio base station to a target radio base station; and
(804) transmitting, to the target radio base station, a request to setup a connection between the UE and the target radio base station.
Additional details regarding the functions of the MME have already been described and are therefore not repeated.

It should be noted that the exemplary embodiments described herein are not limited to any specific combination of hardware circuitry and software.

The present invention and its embodiments can be realized in many ways. For example, one exemplary embodiment of the present invention includes a computer program product for a proxy entity in accordance with previously described exemplary embodiments of the present invention. The program instructions of the computer program product, when run/executed on a computer performs the method steps as set forth in the claims relating to the proxy entity. A further exemplary embodiment of the present invention further includes a computer program product for a MME in accordance with previously described exemplary embodiments of the present invention. The program instructions of the computer program product, when run/executed on a computer performs the method steps as set forth in the claims relating to the MME.

## Claims

1. A proxy entity (330, 460, 500) for reducing a load on a serving gateway (310,410,510) of a wireless communications network system, during a handover of a user equipment, UE, from a serving radio base station (340) to a target radio base station (350); said network system further comprising a mobility management entity, MME (320,420,520,600), said proxy entity **characterized in that** itcomprises:
- a cross connecting circuit (503) configured to support a tunneling link protocol and further configured to receive, from the MME, a cross connect set up request message, requesting the cross connecting circuit (503) to establish using the tunnelling link protocol, a tunnel between the proxy entity (330,460, 500) and the serving radio base station;
- the cross connecting circuit (503) is further configured to establish the tunnel towards the serving radio base station, said established tunnel replacing a previously established tunnel between the proxy entity (330, 460, 500) and the serving gateway;
- a receiver circuit configured to receive, from the MME, a request to handover the UE from the serving radio base station to a target radio base station, the request comprising an identifier of said established tunnel and an address of the target radio base station; and
- the cross connecting circuit (503) is further configured to establish a cross connect tunnel towards the target radio base station using the identifier of the established tunnel and the address of the target radio base station, thereby reducing the load on the serving gateway during the handover of the UE from the serving radio base station to the target radio base station.

2. The proxy entity (330, 460, 500) according to claim 1 wherein each of the tunnels is a GPRS tunneling protocol for UMTS used for user plane, GTP-U, and wherein the proxy entity is configured to use the cross connecting circuit for establishing a cross connect tunnel each time a UE performs a handover from a serving radio base station to a target radio base station thereby relieving the serving gateway from performing route updating due to the handover of the UE.

3. The proxy entity (330, 460, 500) according to claim 1 or claim 2 wherein the cross connecting circuit is (503) configured to handle user plane signalling between the proxy entity (330, 460, 500) and the serving radio base station and/or the target radio base station.

4. The proxy entity (330, 460, 500) according to anyone of the preceding claims wherein the proxy entity is a serving gateway proxy entity.

5. The proxy entity (330, 460, 500) according to anyone of the preceding claims is configured to be implemented in a LTE network and/or a UMTS network and/or a GSM network.

6. A mobility management entity, MME, (320, 420, 520, 600) for enabling a proxy entity (330, 460, 500) according to anyone of claims 1-5 to reduce a load on a serving gateway of a wireless communications network system, during a handover of a user equipment, UE, from a serving radio base station to a target radio base station; the MME comprising
- a transmitter circuit (622) configured to transmit, to a cross connecting circuit (503) of the proxy entity (330, 460, 500), a cross connect setup request message requesting the cross connecting circuit (503) to establish, using a tunneling link protocol, a tunnel between the proxy entity (330, 460, 500) and the serving radio base station;
- the transmitter circuit (622) is further configured to transmit a request to the serving radio base station requesting the serving radio base station to release a connection between the UE and the serving radio base station;
- the transmitter circuit (622) is further configured to transmit a handover request to the proxy entity (330, 460, 500) requesting the proxy entity (330, 460, 500) to handover the UE from the serving radio base station to a target radio base station, the request comprising an identifier of said established tunnel and an address of the target radio base station; and
- the transmitter circuit (622) is further configured to send to the target radio base station, a request to setup a connection between the UE and the target radio base station.

7. The MME (320, 420, 520, 600) according to claim 6 is further configured to be implemented in a LTE network and/or a UMTS network and/or a GSM network.

8. A method, in a proxy entity (330, 460, 500), for reducing a load on a serving gateway of a wireless communications network system, during a handover of a user equipment, UE, from a serving radio base station to a target radio base station; said network system further comprising a mobility management entity, MME (320,420, 520, 600), **characterized in that** the method comprises:
- receiving (701), from the MME (320, 420, 520, 600), a cross connect set up request message, requesting a cross connecting circuit (503) of the proxy entity (330, 460, 500), to establish using a tunneling link protocol, a tunnel between the proxy entity (330, 460, 500), and the serving radio base station;
- establishing (702) the tunnel towards the serving radio base station, said established tunnel replacing a previously established tunnel between the proxy entity (330, 460, 500), and the serving gateway;
- receiving (703), from the MME (320, 600, 420, 520, 600), a request to handover the UE from the serving radio base station to a target radio base station, the request comprising an identifier of said established tunnel and an address of the target radio base station; and
- establishing (704) a cross connect tunnel towards the target radio base station using the identifier of the established tunnel and the address of the target radio base station, thereby reducing the load on the serving gateway during the handover of the UE from the serving radio base station to the target radio base station.

9. The method according to claim 8 comprises establishing a cross connect tunnel each time a UE performs a handover from a serving to a target radio base station thereby relieving the serving gateway from performing route updating due to the handover of the UE.

10. The method according to claim 8 or claim 9 comprises handling user plane signalling between the proxy entity (330, 460, 500) and the serving radio base station and/or the target radio base station.

11. A method, in a mobility management entity, MME (320, 420, 520, 600), for enabling a proxy entity (330, 460, 500) according to anyone of claims 1-5 to reduce a load on a serving gateway of a wireless communications network system, during a handover of a user equipment, UE, from a serving radio base station to a target radio base station; the method comprising.
- transmitting (801), to a cross connecting circuit (503) of the proxy entity (330, 460, 500), a cross connect setup request message requesting the cross connecting circuit (503) to establish, using a tunneling link protocol, a tunnel between the proxy entity (330, 460, 500) and the serving radio base station;
- transmitting (802) a request to the serving radio base station requesting the serving radio base station to release a connection between the UE and the serving radio base station;
- transmitting (803) a handover request to the proxy entity (330, 460, 500) requesting the proxy entity to handover the UE from the serving radio base station to a target radio base station, the request comprising an identifier of said established tunnel and an address of the target radio base station; and
- transmitting (804), to the target radio base station, a request to setup a connection between the UE and the target radio base station.

12. A computer program product for a proxy entity (330, 460, 500) according to anyone of claims 1-5, with program instructions causing a computer to perform the method of anyone of method claims 8-10 when the program is run on a computer.

13. A computer program product for a mobility management entity, MME (320, 420, 520, 600), according to claim 6, with program instructions causing a computer to perform the method of claim 11 when the program is run on a computer.

## Patentansprüche

1. Proxy-Instanz (330, 460, 500) zum Verringern einer Last auf einem versorgenden Gateway (310, 410, 510) eines drahtlosen Kommunikationsnetzwerksystems während einer Verbindungsübergabe einer Benutzereinrichtung, UE, von einer versorgenden Funkbasisstation (340) zu einer Ziel-Funkbasisstation (350), wobei das Netzwerksystem ferner eine Mobilitätsverwaltungsinstanz, MME, (320, 420, 520, 600) umfasst, wobei die Proxy-Instanz **dadurch gekennzeichnet ist, dass** sie umfasst:
- eine Querverbindungsschaltung (503), die dafür konfiguriert ist, ein Tunnelverbindungsprotokoll zu unterstützen, und ferner dafür konfiguriert ist, von der MME eine Querverbindungsaufbau-Anforderungsnachricht zu empfangen, die anfordert, dass die Querverbindungsschaltung (503) unter Verwendung des Tunnelverbindungsprotokolls einen Tunnel zwischen der Proxy-Instanz (330, 460, 500) und der versorgenden Funkbasisstation einrichtet;
- wobei die Querverbindungsschaltung (503) ferner dafür konfiguriert ist, den Tunnel zu der versorgenden Funkbasisstation einzurichten, wobei der eingerichtete Tunnel einen vorher eingerichteten Tunnel zwischen der Proxy-Instanz (330, 460, 500) und dem versorgenden Gateway ersetzt;
- eine Empfängerschaltung, die dafür konfiguriert ist, von der MME eine Anforderung zu empfangen, die UE von der versorgenden Funkbasisstation zu einer Ziel-Funkbasisstation zu übergeben, wobei die Anforderung eine Kennung des eingerichteten Tunnels und eine Adresse der Ziel-Funkbasisstation umfasst; und
- die Querverbindungsschaltung (503) ferner dafür konfiguriert ist, einen Querverbindungstunnel zur Ziel-Funkbasisstation unter Verwendung der Kennung des eingerichteten Tunnels und der Adresse der Ziel-Funkbasisstation einzurichten, wodurch die Last auf dem versorgenden Gateway während der Verbindungsübergabe der UE von der versorgenden Funkbasisstation zur Ziel-Funkbasisstation verringert wird.

2. Proxy-Instanz (330, 460, 500) nach Anspruch 1, worin jeder der Tunnel ein für die Benutzerebene verwendetes GPRS-Tunnelprotokoll für UMTS, GTP-U, ist, und worin die Proxy-Instanz dafür konfiguriert ist, jedes Mal, wenn eine UE eine Verbindungsübergabe von einer versorgenden Funkbasisstation zu einer Ziel-Funkbasisstation durchführt, die Querverbindungsschaltung zum Einrichten eines Querverbindungstunnels zu verwenden, wodurch der versorgende Gateway vom Durchführen einer Leitweglenkungsaktualisierung aufgrund der Verbindungsübergabe der UE befreit wird.

3. Proxy-Instanz (330, 460, 500) nach Anspruch 1 oder Anspruch 2, worin die Querverbindungsschaltung (503) dafür konfiguriert ist, die Benutzerebenensignalisierung zwischen der Proxy-Instanz (330, 460, 500) und der versorgenden Funkbasisstation und/oder der Ziel-Funkbasisstation abzuwickeln.

4. Proxy-Instanz (330, 460, 500) nach einem der vorhergehenden Ansprüche, worin die Proxy-Instanz eine Proxy-Instanz eines versorgenden Gateways ist.

5. Proxy-Instanz (330, 460, 500) nach einem der vorhergehenden Ansprüche, die dafür konfiguriert ist, in einem LTE-Netzwerk und/oder einem UMTS-Netzwerk und/oder einem GSM-Netzwerk implementiert zu werden.

6. Mobilitätsverwaltungsinstanz, MME, (320, 420, 520, 600) zum Ermöglichen, dass eine Proxy-Instanz (330, 460, 500) nach einem der Ansprüche 1 bis 5 eine Last auf einem versorgenden Gateway eines drahtlosen Kommunikationsnetzwerksystems während einer Verbindungsübergabe einer Benutzereinrichtung, UE, von einer versorgenden Funkbasisstation zu einer Ziel-Funkbasisstation verringert; wobei die MME umfasst:
- eine Senderschaltung (622), die dafür konfiguriert ist, an eine Querverbindungsschaltung (503) der Proxy-Instanz (330, 460, 500) eine Querverbindungsaufbau-Anforderungsnachricht zu senden, die anfordert, dass die Querverbindungsschaltung (503) unter Verwendung eines Tunnelverbindungsprotokolls einen Tunnel zwischen der Proxy-Instanz (330, 460, 500) und der versorgenden Funkbasisstation einrichtet;
- wobei die Senderschaltung (622) ferner dafür konfiguriert ist, eine Anforderung an die versorgende Funkbasisstation zu senden, die anfordert, dass die versorgende Funkbasisstation eine Verbindung zwischen der UE und der versorgenden Funkbasisstation freigibt;
- wobei die Senderschaltung (622) ferner dafür konfiguriert ist, eine Verbindungsübergabe-Anforderung an die Proxy-Instanz (330, 460, 500) zu senden, die anfordert, dass die Proxy-Instanz (330, 460, 500) die UE von der versorgenden Funkbasisstation zu einer Ziel-Funkbasisstation übergibt, wobei die Anforderung eine Kennung des eingerichteten Tunnels und eine Adresse der Ziel-Funkbasisstation umfasst; und
- wobei die Senderschaltung (622) ferner dafür konfiguriert ist, an die Ziel-Funkbasisstation eine Anforderung zu senden, eine Verbindung zwischen der UE und einer Ziel-Funkbasisstation aufzubauen.

7. MME (320, 420, 520, 600) nach Anspruch 6, die ferner dafür konfiguriert ist, in einem LTE-Netzwerk und/oder einem UMTS-Netzwerk und/oder einem GSM-Netzwerk implementiert zu werden.

8. Verfahren in einer Proxy-Instanz (330, 460, 500) zum Verringern einer Last auf einem versorgenden Gateway eines drahtlosen Kommunikationsnetzwerksystems während einer Verbindungsübergabe einer Benutzereinrichtung, UE, von einer versorgenden Funkbasisstation zu einer Ziel-Funkbasisstation; wobei das Netzwerksystem ferner eine Mobilitätsverwaltungsinstanz, MME, (320, 420, 520, 600) umfasst, **dadurch gekennzeichnet, dass** das Verfahren umfasst:
- Empfangen (701) einer Querverbindungsaufbau-Anforderungsnachricht von der MME, die anfordert, dass eine Querverbindungsschaltung (503) der Proxy-Instanz (330, 460, 500) unter Verwendung eines Tunnelverbindungsprotokolls einen Tunnel zwischen der Proxy-Instanz (330, 460, 500) und der versorgenden Funkbasisstation einrichtet;
- Einrichten (702) des Tunnels zu der versorgenden Funkbasisstation, wobei der eingerichtete Tunnel einen vorher eingerichteten Tunnel zwischen der Proxy-Instanz (330, 460, 500) und dem versorgenden Gateway ersetzt;
- Empfangen (703) einer Anforderung von der MME (320, 420, 520, 600), die UE von der versorgenden Funkbasisstation zu einer Ziel-Funkbasisstation zu übergeben, wobei die Anforderung eine Kennung des eingerichteten Tunnels und eine Adresse der Ziel-Funkbasisstation umfasst; und
- Einrichten (704) eines Querverbindungstunnels zur Ziel-Funkbasisstation unter Verwendung der Kennung des eingerichteten Tunnels und der Adresse der Ziel-Funkbasisstation, wodurch die Last auf dem versorgenden Gateway während der Verbindungsübergabe der UE von der versorgenden Funkbasisstation zur Ziel-Funkbasisstation verringert wird.

9. Verfahren nach Anspruch 8, umfassend: jedes Mal, wenn eine UE eine Verbindungsübergabe von einer versorgenden zu einer Ziel-Funkbasisstation durchführt, erfolgendes Einrichten eines Querverbindungstunnels, wodurch der versorgende Gateway vom Durchführen einer Leitweglenkungsaktualisierung aufgrund der Verbindungsübergabe der UE befreit wird.

10. Verfahren nach Anspruch 8 oder 9, umfassend: Abwickeln der Benutzerebenensignalisierung zwischen der Proxy-Instanz (330, 460, 500) und der versorgenden Funkbasisstation und/oder der Ziel-Funkbasisstation.

11. Verfahren in einer Mobilitätsverwaltungsinstanz, MME, (320, 420, 520, 600) zum Ermöglichen, dass eine Proxy-Instanz (330, 460, 500) nach einem der Ansprüche 1 bis 5 eine Last auf einem versorgenden Gateway eines drahtlosen Kommunikationsnetzwerksystems während einer Verbindungsübergabe einer Benutzereinrichtung, UE, von einer versorgenden Funkbasisstation zu einer Ziel-Funkbasisstation verringert; wobei das Verfahren umfasst:
- Senden (801) einer Querverbindungsaufbau-Anforderungsnachricht an eine Querverbindungsschaltung (503) der Proxy-Instanz (330, 460, 500), die anfordert, dass die Querverbindungsschaltung (503) unter Verwendung eines Tunnelverbindungsprotokolls einen Tunnel zwischen der Proxy-Instanz (330, 460, 500) und der versorgenden Funkbasisstation einrichtet;
- Senden (802) einer Anforderung an die versorgende Funkbasisstation, die anfordert, dass die versorgende Funkbasisstation eine Verbindung zwischen der UE und der versorgenden Funkbasisstation freigibt;
- Senden (803) einer Verbindungsübergabe-Anforderung an die Proxy-Instanz (330, 460, 500), die anfordert, dass die Proxy-Instanz (330, 460, 500) die UE von der versorgenden Funkbasisstation zu einer Ziel-Funkbasisstation übergibt, wobei die Anforderung eine Kennung des eingerichteten Tunnels und eine Adresse der Ziel-Funkbasisstation umfasst; und
- Senden (804) einer Anforderung an die Ziel-Funkbasisstation, eine Verbindung zwischen der UE und einer Ziel-Funkbasisstation aufzubauen.

12. Computerprogrammprodukt für eine Proxy-Instanz (330, 460, 500) nach einem der Ansprüche 1 bis 5 mit Programmanweisungen, die einen Computer veranlassen, das Verfahren nach einem der Verfahrensansprüche 8 bis 10 durchzuführen, wenn das Programm auf einem Computer ausgeführt wird.

13. Computerprogrammprodukt für eine Mobilitätsverwaltungsinstanz, MME, (320, 420, 520, 600) nach Anspruch 6 mit Programmanweisungen, die einen Computer veranlassen, das Verfahren nach Anspruch 11 durchzuführen, wenn das Programm auf einem Computer ausgeführt wird.

## Revendications

1. Entité mandataire (330, 460, 500) destinée à réduire une charge sur une passerelle de desserte (310, 410, 510) d'un système de réseau de communication sans fil, au cours d'un transfert intercellulaire d'un équipement d'utilisateur, UE, d'une station de base radio de desserte (340) à une station de base radio cible (350), ledit système de réseau comprenant en outre une entité de gestion de la mobilité, MME (320, 420, 520, 600) ladite entité mandataire étant **caractérisée en ce qu'**elle comprend :
- un circuit d'interconnexion (503) configuré de manière à prendre en charge un protocole de liaison de tunnellisation et en outre configuré de manière à recevoir, en provenance de l'entité MME, un message de demande d'établissement d'interconnexion, demandant au circuit d'interconnexion (503) d'établir, au moyen du protocole de liaison de tunnellisation, un tunnel entre l'entité mandataire (330, 460, 500) et la station de base radio de desserte ;
- le circuit d'interconnexion (503) est en outre configuré de manière à établir le tunnel vers la station de base radio de desserte, ledit tunnel établi remplaçant un tunnel établi précédemment entre l'entité mandataire (330, 460, 500) et la passerelle de desserte ;
- un circuit récepteur configuré de manière à recevoir, en provenance de l'entité MME, une demande de transfert intercellulaire de l'équipement UE, de la station de base radio de desserte à une station de base radio cible, la demande comprenant un identifiant dudit tunnel établi et une adresse de la station de base radio cible ; et
- le circuit d'interconnexion (503) est en outre configuré de manière à établir un tunnel d'interconnexion vers la station de base radio cible, en moyen de l'identifiant du tunnel établi et de l'adresse de la station de base radio cible, ce qui permet de réduire par conséquent la charge de la passerelle de desserte au cours du transfert intercellulaire de l'équipement UE, de la station de base radio de desserte à la station de base radio cible.

2. Entité mandataire (330, 460, 500) selon la revendication 1, dans laquelle chacun des tunnels représente un protocole de tunnellisation GPRS pour système UMTS utilisé pour le plan utilisateur, GTP-U, et dans laquelle l'entité mandataire est configurée de manière à utiliser le circuit d'interconnexion en vue d'établir un tunnel d'interconnexion chaque fois qu'un équipement UE met en oeuvre un transfert intercellulaire d'une station de base radio de desserte à une station de base radio cible, ce qui permet par conséquent de dispenser la passerelle de desserte de mettre en oeuvre une mise à jour d'itinéraire sous l'effet du transfert intercellulaire de l'équipement UE.

3. Entité mandataire (330, 460, 500) selon la revendication 1 ou 2, dans laquelle le circuit d'interconnexion (503) est configuré de manière à gérer la signalisation de plan utilisateur entre l'entité mandataire (330, 460, 500) et la station de base radio de desserte et/ou la station de base radio cible.

4. Entité mandataire (330, 460, 500) selon l'une quelconque des revendications précédentes, dans laquelle l'entité mandataire est une entité mandataire de passerelle de desserte.

5. Entité mandataire (330, 460, 500) selon l'une quelconque des revendications précédentes, configurée de manière à être mise en oeuvre dans un réseau LTE et/ou un réseau UMTS et/ou un réseau GSM.

6. Entité de gestion de la mobilité, MME, (320, 420, 520, 600) destinée à permettre à une entité mandataire (330, 460, 500) selon l'une quelconque des revendications 1 à 5 de réduire une charge sur une passerelle de desserte d'un système de réseau de communication sans fil, au cours d'un transfert intercellulaire d'un équipement d'utilisateur, UE, d'une station de base radio de desserte à une station de base radio cible ; l'entité MME comprenant :
- un circuit émetteur (622) configuré de manière à transmettre, à un circuit d'interconnexion (503) de l'entité mandataire (330, 460, 500), un message de demande d'établissement d'interconnexion demandant au circuit d'interconnexion (503) d'établir, au moyen d'un protocole de liaison de tunnellisation, un tunnel entre l'entité mandataire (330, 460, 500) et la station de base radio de desserte ;
- le circuit émetteur (622) est en outre configuré de manière à transmettre une demande à la station de base radio de desserte, invitant la station de base radio de desserte à libérer une connexion entre l'équipement UE et la station de base radio de desserte ;
- le circuit émetteur (622) est en outre configuré de manière à transmettre une demande de transfert intercellulaire à l'entité mandataire (330, 460, 500), invitant l'entité mandataire (330, 460, 500) à transférer l'équipement UE de la station de base radio de desserte à une station de base radio cible, la demande comprenant un identifiant dudit tunnel établi et une adresse de la station de base radio cible ; et
- le circuit émetteur (622) est en outre configuré de manière à envoyer à la station de base radio cible, une demande visant à établir une connexion entre l'équipement UE et la station de base radio cible.

7. Entité MME (320, 420, 520, 600) selon la revendication 6, en outre configurée de manière à être mise en oeuvre dans un réseau LTE et/ou un réseau UMTS et/ou un réseau GSM.

8. Procédé, mis en oeuvre dans une entité mandataire (330, 460, 500), en vue de réduire une charge sur une passerelle de desserte d'un système de réseau de communication sans fil, au cours d'un transfert intercellulaire d'un équipement d'utilisateur, UE, d'une station de base radio de desserte à une station de base radio cible ; ledit système de réseau comprenant en outre une entité de gestion de la mobilité, MME (320, 420, 520, 600), **caractérisé en ce que** le procédé consiste à :
- recevoir (701), en provenance de l'entité MME (320, 420, 520, 600), un message de demande d'établissement d'interconnexion invitant un circuit d'interconnexion (503) de l'entité mandataire (330, 460, 500) à établir, au moyen d'un protocole de liaison de tunnellisation, un tunnel entre l'entité mandataire (330, 460, 500) et la station de base radio de desserte ;
- établir (702) le tunnel vers la station de base radio de desserte, ledit tunnel établi remplaçant un tunnel établi précédemment entre l'entité mandataire (330, 460, 500) et la passerelle de desserte ;
- recevoir (703), en provenance de l'entité MME (320, 600, 420, 520, 600), une demande de transfert intercellulaire de l'équipement UE, de la station de base radio de desserte à une station de base radio cible, la demande comprenant un identifiant dudit tunnel établi et une adresse de la station de base radio cible ; et
- établir (704) un tunnel d'interconnexion vers la station de base radio cible en utilisant l'identifiant du tunnel établi et l'adresse de la station de base radio cible, ce qui permet de réduire par conséquent la charge sur la passerelle de desserte au cours du transfert intercellulaire de l'équipement UE, de la station de base radio de desserte à la station de base radio cible.

9. Procédé selon la revendication 8, consistant à établir un tunnel d'interconnexion chaque fois qu'un équipement UE met en oeuvre un transfert intercellulaire d'une station de base radio de desserte à une station de base radio cible, ce qui permet par conséquent de dispenser la passerelle de desserte de mettre en oeuvre une mise à jour d'itinéraire sous l'effet du transfert intercellulaire de l'équipement UE.

10. Procédé selon la revendication 8 ou 9, consistant à gérer la signalisation de plan utilisateur entre l'entité mandataire (330, 460, 500) et la station de base radio de desserte et/ou la station de base radio cible.

11. Procédé, mis en oeuvre dans une entité de gestion de la mobilité, MME (320, 420, 520, 600), en vue de permettre à une entité mandataire (330, 460, 500) selon l'une quelconque des revendications 1 à 5 de réduire une charge sur une passerelle de desserte d'un système de réseau de communication sans fil, au cours d'un transfert intercellulaire d'un équipement d'utilisateur, UE, d'une station de base radio de desserte à une station de base radio cible, le procédé consistant à :
- transmettre (801), à un circuit d'interconnexion (503) de l'entité mandataire (330, 460, 500), un message de demande d'établissement d'interconnexion invitant le circuit d'interconnexion (503) à établir, au moyen d'un protocole de liaison de tunnellisation, un tunnel entre l'entité mandataire (330, 460, 500) et la station de base radio de desserte ;
- transmettre (802) une demande, à la station de base radio de desserte, invitant la station de base radio de desserte à libérer une connexion entre l'équipement UE et la station de base radio de desserte ;
- transmettre (803) une demande de transfert intercellulaire à l'entité mandataire (330, 460, 500), invitant l'entité mandataire à transférer l'équipement UE de la station de base radio de desserte à une station de base radio cible, la demande comprenant un identifiant dudit tunnel établi et une adresse de la station de base radio cible ; et
- transmettre (804), à la station de base radio cible, une demande visant à établir une connexion entre l'équipement UE et la station de base radio cible.

12. Produit-programme informatique pour une entité mandataire (330, 460, 500) selon l'une quelconque des revendications 1 à 5, comportant des instructions de programme amenant un ordinateur à mettre en oeuvre le procédé selon l'une quelconque des revendications de procédé 8 à 10, lorsque le programme est exécuté sur un ordinateur.

13. Produit-programme informatique pour une entité de gestion de la mobilité, MME (320, 420, 520, 600), selon la revendication 6, comportant des instructions de programme amenant un ordinateur à mettre en oeuvre le procédé selon la revendication 11 lorsque le programme est exécuté sur un ordinateur.
